# EUROPÄISCHE PATENTSCHRIFT

(11) **EP 3 720 746 B1**
(45) Veröffentlichungstag und Bekanntmachung des Hinweises auf die Patenterteilung: **14.06.2023**
(21) Anmeldenummer: 18808285.3
(22) Anmeldetag: 21.11.2018
(51) Int. Cl.: B60T 17/22, B60T 8/17

(54) **VERFAHREN ZUR DURCHFÜHRUNG EINER BREMSPROBE AN MINDESTENS EINER MAGNETSCHIENENBREMSEINHEIT EINES SCHIENENFAHRZEUGES**
METHOD FOR CARRYING OUT A BRAKING TEST AT AT LEAST ONE ELECTROMAGNETIC RAIL BRAKE UNIT OF A RAIL VEHICLE
PROCÉDÉ SERVANT À EFFECTUER UN TEST DE FREINAGE SUR AU MOINS UN ENSEMBLE FREIN ÉLECTROMAGNÉTIQUE SUR RAIL D'UN VÉHICULE FERROVIAIRE

(30) Priorität: 08.12.2017 DE 102017129253
(43) Veröffentlichungstag der Anmeldung: 14.10.2020
(73) Patentinhaber: Bombardier Transportation GmbH, 10785 Berlin (DE)
(72) Erfinder: HEIDRICH, Peter, 67067 Ludwighafen (DE); RÖSSLING, Brigitte, 68305 Mannheim (DE)
(74) Vertreter: Zimmermann & Partner Patentanwälte mbB
(86) Internationale Anmeldenummer: PCT/EP2018/082104
(87) Internationale Veröffentlichungsnummer: WO 2019/110309

(56) Entgegenhaltungen:
- EP-A1- 0 391 047
- EP-A2- 2 399 799
- DE-A1- 10 203 972
- DE-A1-102007 034 799
- DE-A1-102012 014 158
- US-A1- 2014 246 282
- US-A1- 2017 066 458

## Beschreibung

Die Erfindung betrifft ein Verfahren zur Durchführung einer Bremsprobe an mindestens einer Magnetschienenbremseinheit eines Schienenfahrzeuges.

Eine Magnetschienenbremse dient bei Schienenfahrzeugen als eine zusätzliche Reibungsbremse. Eine Bremswirkung wird erzeugt, indem magnetisierbare Bremsklötze über Elektromagneten erregt werden. Durch die entstehenden magnetischen Kräfte werden die Bremsklötze gegen eine Fahrschiene gepresst. Dies erzeugt eine Bremskraft durch Reibung. Für die Bremswirkung muss sichergestellt werden, dass a) die Magnetschienenbremse abgesenkt ist und die Bremsklötze eine Schienenoberkante berühren und b) ein Strom zur Erzeugung der Magnetkraft fließt. Eine Überwachung eines Stromflusses kann mit geeigneten bekannten Mitteln durchgeführt werden.

Die DE 10 2007 034 799 A1 beschreibt ein Verfahren zum statischen Überprüfen eines mehrere Bremsarten aufweisenden Bremssystems eines Fahrzeugs. Die Bremsarten umfassen u.a. eine Schienenbremse mit Bremsschuhen. Bei einer Betätigung der Schienenbremse erfassen Stromsensoren einen durch das Bremsen hervorgerufenen Stromfluss unter Gewinnung von Bremsstromwerten. Die Bremsstromwerte werden als Zustandsdaten an eine Bremsprobensteuerungseinheit übertragen. Nachteilig ist hierbei, dass allein die Bremsprobensteuerungseinheit Bremskomponenten einer Bremsart überprüft. Dadurch können nur der Stromfluss bzw. die Bremsstromwerte überwacht werden.

Die DE 10 2008 029 312 B3 offenbart ein Verfahren zur Wirküberwachung von Schienenbremsen, z.B. Magnetschienenbremsen, bei dem ein elektrischer Strom gemessen wird und der zeitliche Verlauf des gemessenen Stromes mit einem gespeicherten zeitlichen Verlauf eines Referenzstroms verglichen wird. Die Messung erfolgt mittels eines Messwiderstands in einem Steuergerät. Die Auswertung des zeitlichen Verlaufs des Stroms und der Vergleich mit einem zu erwartenden Stromverlauf kann von einem Mikroprozessor in einem Bremssteuergerät vorgenommen werden. Auch hier ist es nachteilig, dass mit Hilfe des Steuergerätes und des Bremssteuergerätes lediglich ein Stromverlauf gemessen und ausgewertet werden kann.

Die DE 10 2012 014 158 B4 betrifft ein Verfahren zur Überprüfung des tatsächlichen Aufliegens von Polschuhen einer Magnetschienenbremse für Schienenfahrzeuge auf einer Schienenoberfläche. Für diese Überprüfung werden eine Rückstellkraft von Rückholfedern, eine i.a. pneumatische Absenckraft und eine elektromagnetische Kraft zwischen eingeschalteten Elektromagneten in den Polschuhen und der Schiene gemessen. Das Verfahren wird von einer Software in einer Steuereinheit gesteuert. Ein Nachteil des Verfahrens liegt darin, dass nur eine Steuereinheit vorhanden ist, mit der ausschließlich Kräfte ermittelt werden können.

Der Erfindung liegt daher die Aufgabe zu Grunde, ein Verfahren zur Durchführung einer Bremsprobe an mindestens einer Magnetschienenbremseinheit eines Schienenfahrzeuges zu schaffen, mit dem nicht nur eine Messung eines Stroms, sondern auch ein sicheres Erkennen eines Aufsetzens von Bremsklötzen auf einer Schienenoberkante möglich ist.

Diese Aufgabe wird erfindungsgemäß mit einem Verfahren zur Durchführung einer Bremsprobe an mindestens einer Magnetschienenbremseinheit eines Schienenfahrzeuges nach Anspruch 1 gelöst. Vorteilhafte Ausgestaltungen der Erfindung sind in den Unteransprüchen enthalten.

Erfindungsgemäß besteht die Lösung der Aufgabe in einem Verfahren zur Durchführung einer Bremsprobe an mindestens einer Magnetschienenbremseinheit eines Schienenfahrzeuges, wobei eine Bremswirkung eines jeden Bremsenpaares 1 bis n der Magnetschienenbremseinheit bei einem Stillstand des Schienenfahrzeugs überprüft wird, mit
- einer Startphase,
- je einer Überprüfungsphase für jedes Bremsenpaar 1 bis n der Magnetschienenbremseinheit und
- einer Abschlussphase.

Die Bremsprobe wird von einer Fahrzeugsteuerung, einer Bremssteuerung, einer Antriebssteuerung und einer unabhängigen Überwachung durchgeführt, die mit einander über ein Datenübertragungssystem gekoppelt sind.

Ein Vorteil des erfindungsgemäßen Verfahrens besteht darin, dass mit Hilfe der Fahrzeugsteuerung, der Bremssteuerung, der Antriebssteuerung und der unabhängigen Überwachung sowie deren Kopplung über ein Datenübertragungssystem nicht nur Strommesswerte ermittelt werden können. Es kann zusätzlich ein jeweils tatsächlich vorhandenes Bremsmoment jedes Bremsenpaares 1 bis n überwacht werden. Jedes Bremsenpaar 1 bis n umfasst eine rechtsseitige Bremsanordnung für eine in Fahrtrichtung rechtsseitige Fahrschiene und eine linksseitige Bremsanordnung für eine in Fahrtrichtung linksseitige Fahrschiene. Um das Bremsmoment aufzubringen, müssen Bremsklötze der Bremsenpaare 1 bis n jeweils sicher auf einer Schienenoberkante der rechtsseitigen Fahrschiene und einer Schienenoberkante der linksseitigen Fahrschiene aufsitzen. Somit kann anhand des Bremsmoments sicher auf den Kontakt zwischen den Bremsenpaaren 1 bis n und den Schienenoberkanten geschlossen werden. Die unabhängige Überwachung wird halbautomatisch mit Unterstützung durch einen Fahrzeugführer oder vollautomatisch mittels eines computergestützten Überwachungsgerätes durchgeführt. Das Datenübertragungssystem kann z.B. ein Bussystem sein.

Vorzugsweise kann in der Startphase
- eine Testfreigabe erfolgen,
- anschließend mindestens eine Federspeicherbremse gelöst werden,
- danach ein Stillstandsüberwachungssystem aktiviert werden und
- darauf folgend eine Stillstandsüberwachung durchgeführt werden,
und nach der Startphase kann bei einem vorhandenen Stillstand das Bremsenpaar 1 und nach jeder Überprüfungsphase das jeweils nächste Bremsenpaar 2 bis n angelegt werden.

Die Testfreigabe kennzeichnet den Beginn der Durchführung der Bremsprobe. Das Lösen der Federspeicherbremse stellt eine Vorbereitung des Schienenfahrzeugs für die Bremsprobe dar. Die Federspeicherbremse ist eine Feststellbremse. Die Überwachung eines Stillstandssignals ist essentieller Bestandteil der Bremsprobe. Erstens muss es anstehen, damit die Bremsprobe an der Magnetschienenbremseinheit starten kann. Wenn zweitens die Bremsprobe an der Magnetschienenbremseinheit läuft und das Stillstandssignal wegfällt, so ist dies ein sicheres Anzeichen für ein Versagen der Magnetschienenbremseinheit und somit eines negativen Ausgangs der Bremsprobe. Das Stillstandsüberwachungssystem ist also erforderlich, um festzustellen, ob die Bremsprobe bei einem tatsächlichen Stillstand fortgesetzt werden kann oder ob die Bremsprobe wegen eines nicht vorhandenen Stillstands abgebrochen werden muss. Die Bremsenpaare 1 bis n können nacheinander überprüft werden, wenn jede Überprüfungsphase für ein jeweils vorher geprüftes Bremsenpaar erfolgreich war.

In einer zweckmäßigen Ausgestaltung der Erfindung ist vorgesehen, dass die Testfreigabe durch die Fahrzeugsteuerung, ein Lösen der Federspeicherbremse durch die Bremssteuerung, die Aktivierung des Stillstandsüberwachungssystems durch die Antriebssteuerung sowie die unabhängige Überwachung erfolgt, wobei die Stillstandsüberwachung durch die Antriebssteuerung erfolgt, und ein Anlegen jedes Bremsenpaares 1 bis n durch die Fahrzeugsteuerung und die Bremssteuerung erfolgt. Die Testfreigabe wird somit an einer zentralen Stelle des Schienenfahrzeugs ausgeführt. Die Bremssteuerung umfasst eine Steuerung der Federspeicherbremse. Die Aktivierung des Stillstandsüberwachungssystems durch die Antriebssteuerung und die unabhängige Überwachung ermöglicht eine doppelte Absicherung bezüglich eines für die Bremsprobe erforderlichen Sillstands des Schienenfahrzeugs.

In einer vorteilhaften Weiterbildung der Erfindung wird bei jeder Überprüfungsphase für jedes Bremsenpaar 1 bis n eine permanente Stillstandsüberwachung durchgeführt. Dadurch wird gewährleistet, dass während der gesamten Bremsprobe der Stillstand des Schienenfahrzeugs überwacht wird.

Zusätzlich kann vorgesehen sein, dass in jeder Überprüfungsphase ein Mindeststrom gemessen wird. Dieser Prüfschritt ist optional. Eine Messung des Mindeststroms ist normalerweise bei einer Magnetschienenbremseinheit ohnehin bereits vorgesehen. Diese kann bei dem erfindungsgemäßen Verfahren beibehalten werden, um Umbaumaßnahmen zu vermeiden. Die Messung des Mindeststroms kann deaktiviert werden. Eine Überwachung des Mindeststroms erleichtert jedoch eine Diagnose, wenn kein Aufsetzen detektiert werden würde, da ein Aufsetzen eines Bremsenpaares auf die Schienenoberkante einen Stromfluss erfordert. Fehlt schon der Mindeststrom, so ist dies eine notwendige und hinreichende Bedingung für das Nicht-Aufsetzen eines Bremsenpaares auf die Schienenoberkante.

Insbesondere erfolgt ein Messen des Mindeststroms durch die Fahrzeugsteuerung und/oder durch die Bremssteuerung. Mit Hilfe der Fahrzeugsteuerung und/oder der Bremssteuerung kann der Mindeststrom auf einfache Weise gemessen werden.

Vorzugsweise ist vorgesehen, dass
- nach dem Anlegen eines Bremsenpaares 1 bis n
- ein Mindeststrom erkannt wird oder eine Mindeststrommessung entfällt,
- bei einem Bremsenpaar 1 eine Haltebremse oder bei einem Bremsenpaar 2 bis n ein vorher überprüftes Bremsenpaar n-1 gelöst wird und
- anschließend eine permanente Stillstandsüberwachung durchgeführt wird.

Dieser Verfahrensschritt gewährleistet, dass die permanente Stillstandsüberwachung einen Einfluss auf die Bremsprobe nimmt. Eine weitere permantente Stillstandsüberwachung erfolgt außerdem auch kontinuierlich ab der Startphase des Verfahrens. Eine Haltebremse ist eine Sicherheitsbremse und kann das Schienenfahrzeug aus der Fahrt heraus abbremsen oder sicher im Stillstand halten. Für die Bremsprobe trifft das sichere Halten im Stillstand zu.

Außerdem ist vorgesehen, dass bei einem tatsächlichen Stillstand ein Fahrmoment solange erhöht wird, bis ein voreingestelltes, fahrzeugabhängiges Grenzmoment erreicht wird, das kleiner ist als das Losbrechmoment, und dass bei einem Erreichen oder Überschreiten des Grenzmoments das Fahrmoment gesperrt wird. Wenn das Grenzmoment erreicht oder Überschritten wird, kann damit auf das sichere Aufsetzen der Bremsklötze auf der Schienenoberkante geschlossen werden.

Weiterhin ist vorgesehen, dass
- ein Lösen der Haltebremse oder des Bremsenpaares n-1 durch die Bremssteuerung,
- eine Messung des Grenzmoments und ein Hochfahren des Fahrmoments durch die Antriebssteuerung und
- ein Sperren des Fahrmoments durch die Fahrzeugsteuerung und die Antriebssteuerung erfolgen. Die Antriebssteuerung ist gut geeignet, das Grenzmoment zu messen, wobei auf Umbaumaßnahmen für die Messung verzichtet werden kann.

Zweckmäßig werden in der Abschlussphase nach dem Sperren des Fahrmoments
- Antriebe des Schienenfahrzeugs ausgeschaltet,
- die Testfreigabe entfernt,
- der Federspeicher wieder angelegt,
- die Haltebremse wieder angelegt,
- das zuletzt geprüfte Bremsenpaar n gelöst,
- das Testergebnis angezeigt,
- die Stillstandsüberwachung gesperrt und
- das Testende angezeigt.

Dieser Ablauf in der Abschlussphase ist wichtig, damit das Fahrzeug von der Bremsprobe wieder in den Normalbetrieb überführt werden kann.

Insbesondere ist vorgesehen, dass
- ein Ausschalten der Antriebe durch die Antriebssteuerung,
- ein Wegnehmen der Testfreigabe durch die Fahrzeugsteuerung,
- ein Anlegen der Federspeicherbremse, der Haltebremse und des zuletzt geprüften Bremsenpaares n-1 durch die Bremssteuerung,
- ein Anzeigen des Testergebnisses und ein Anzeigen des Testendes durch die Fahrzeugsteuerung und
- eine Sperrung der Stillstandsüberwachung durch die unabhängige Überwachung erfolgen. Diese Zuordnung der Verfahrensschritte zu der Fahrzeugsteuerung, der Bremssteuerung, der Antriebssteuerung und der unabhängigen Überwachung ist besonders gut geeignet, um die Abschlussphase durchzuführen. Vor allem muss die Sperrung der Stillstandsüberwachung durch die unabhängige Überwachung erfolgen, damit gewährleistet ist, dass diese Sperrung überwacht und nicht ausschließlich gesteuert wird.

Speziell ist vorgesehen, dass bei einem Unterschreiten des Mindeststroms oder bei einem mangelnden Stillstand
- eine Schnellbremse ausgelöst wird,
- anschließend die Federspeicherbremse angelegt wird,
- danach eine Fehlermeldung ausgegeben wird und
- zum Schluss die Bremsprobe abgebrochen wird.

Auf diese Weise wird bei einem Erkennen einer mangelnden Bremswirkung durch eines der Bremsenpaare 1 bis n sichergestellt, dass das Schienenfahrzeug mittels der Schnellbremse und der Federspeicherbremse gebremst wird. Eine Schnellbremse ermöglicht eine Bremsung des Schienenfahrzeugs mit maximaler Bremskraft und wirkt innerhalb eines minimalen Zeitraums. Bei der Bremsprobe wird das Schienenfahzeug mittels der Schnellbremse abgebremst, wenn der Mindeststrom unterschritten oder ein mangelnder Stillstand erkannt wird. Die Bremsprobe kann dann nicht fortgesetzt werden und muss z.B. nach einer Reparatur des entsprechenden Bremsenpaares neu beginnen.

Außerdem ist vorgesehen, dass
- ein Auslösen der Schnellbremse und ein Anlegen der Federspeicherbremse durch die Bremssteuerung erfolgen und
- eine Ausgabe der Fehlermeldung und ein Abbrechen der Bremsprobe durch die Fahrzeugsteuerung erfolgen.

Diese Zuordnung der Verfahrensschritte zu der Bremssteuerung und der Fahrzeugsteuerung gewährleistet ein zuverlässiges Bremsen und einen für den Fahrzeugführer klar erkennbaren Abbruch der Bremsprobe in Verbindung mit der Fehlermeldung.

Weiterhin kann vorgesehen sein, dass ein von dem Bremsenpaar 1 bis n erzeugtes maximales Bremsmoment gemessen wird, indem das Fahrmoment solange erhöht wird, bis ein Losbrechmoment des jeweiligen Bremsenpaares 1 bis n erreicht ist, wobei dann das erreichte Fahrmoment dem Losbrechmoment und dem maximalen Bremsmoment entspricht. Dadurch kann das von einem Bremsenpaar 1 bis n tatsächlich erzeugte Bremsmoment ausgemessen werden.

Zudem ist vorgesehen, dass jeder Verfahrensschritt von einem Fehlerüberwachungssystem überwacht wird, das bei jedem Verfahrensschritt einen Fehler detektieren und einen Abbruch der Bremsprobe auslösen kann. Das Fehlerüberwachungssystem erhöht die Sicherheit und Zuverlässigkeit des Verfahrens.

Im Folgenden wird ein Ausführungsbeispiel der Erfindung anhand von drei Figuren näher erläutert. Es zeigen:

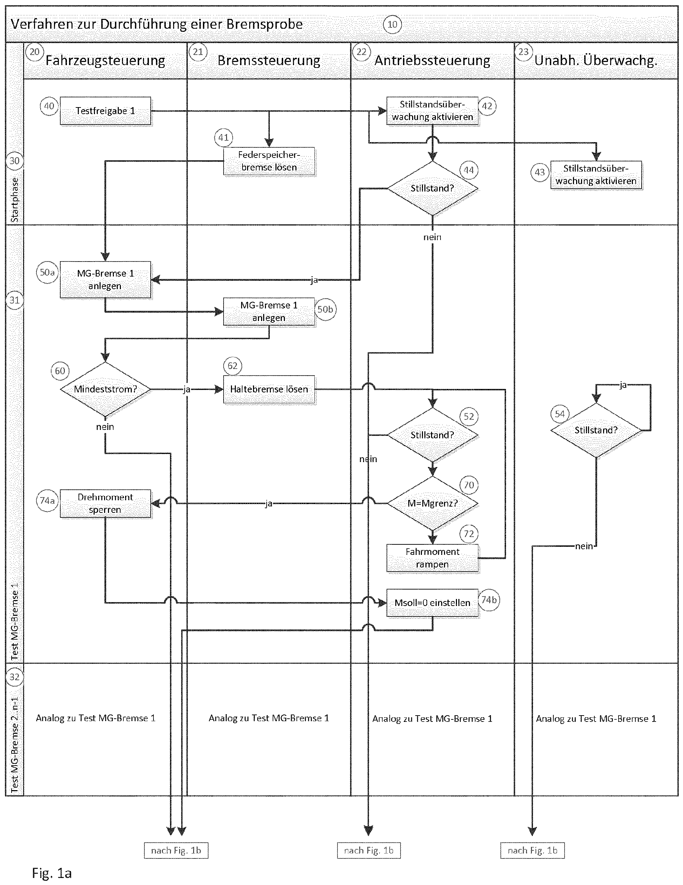

- Fig. 1a: einen ersten Abschnitt eines Flussdiagramms eines erfindungsgemäßen Verfahrens,

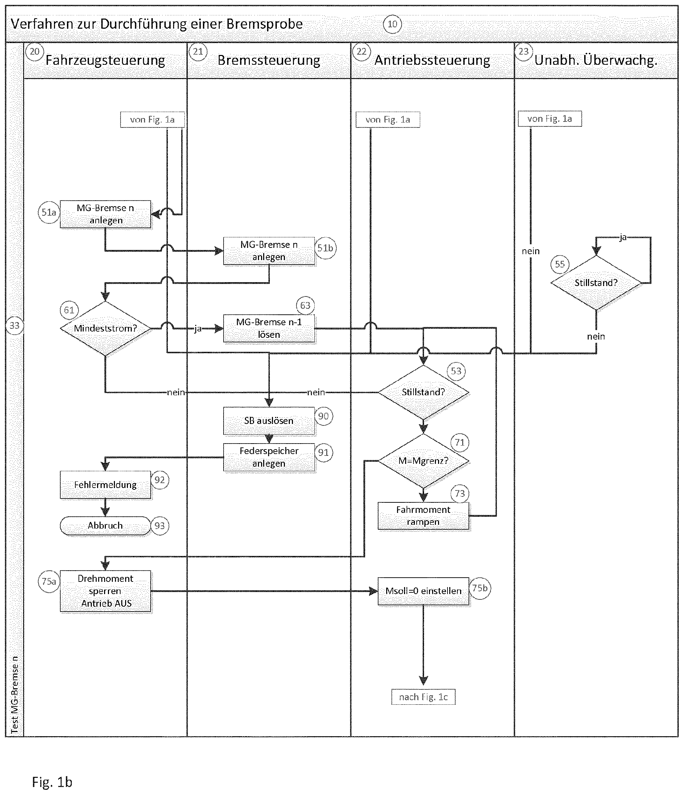

- Fig. 1b: einen zweiten Abschnitt des Flussdiagramms des erfindungsgemäßen Verfahrens und

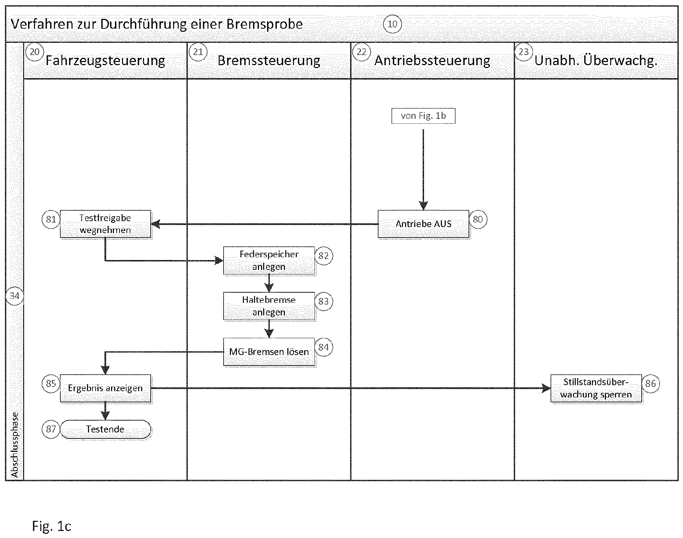

- Fig. 1c: einen dritten Abschnitt des Flussdiagramms des erfindungsgemäßen Verfahrens.

Die Fig. 1a bis 1c zeigen drei Abschnitte eines Flussdiagramms für ein erfindungsgemäßes Verfahren 10 zur Durchführung einer Bremsprobe an mindestens einer Magnetschienenbremseinheit eines Schienenfahrzeugs. Das Verfahren 10 zur Durchführung einer Bremsprobe an mindestens einer Magnetschienenbremseinheit eines Schienenfahrzeugs kann auch als Aufsetzerkennung mindestens einer Magnetschienenbremseinheit eines Schienenfahrzeugs bezeichnet werden. Das Verfahren 10 wird von einer Fahrzeugsteuerung 20, einer Bremssteuerung 21, einer Antriebssteuerung 22 und einer unabhängigen Überwachung 23 durchgeführt, die über ein Datenübertragungssystem, z.B. ein Bussystem, gekoppelt sind. Das Verfahren 10 wird von einer im Flussdiagramm nicht dargestellten Software koordiniert. Die Bremsprobe läuft während eines Stillstands des Schienenfahrzeugs ab.

Fig. 1a stellt einen ersten Abschnitt des Flussdiagramms dar. Der erste Abschnitt umfasst eine Startphase 30, eine Überprüfungsphase 31 für ein Bremsenpaar 1 der Magnetschienenbremseinheit und je eine Überprüfungsphase 32 für ein Bremsenpaar 2 bis n-1 der Magnetschienenbremseinheit.

In der Startphase 30 wird zunächst mittels der Fahrzeugsteuerung 20 eine Testfreigabe 40 durchgeführt. Anschließend wird in einem Verfahrensschritt 41 mit Hilfe der Bremssteuerung 21 eine Federspeicherbremse gelöst. Danach werden in einem Verfahrensschritt 42 mittels der Antriebssteuerung 22 eine Stillstandsüberwachung 44 und in einem Verfahrensschritt 43 mittels der unabhängigen Überwachung 23 eine permanente Stillstandsüberwachung 54 und 55 aktiviert. Nach dem Verfahrensschritt 42 (Aktivieren der Stillstandsüberwachung) wird in der Startphase 30 eine Stillstandsüberwachung 44 durchgeführt.

Wenn ein Stillstand gegeben ist, wird in der Überprüfungsphase 31 in einem Verfahrensschritt 50a, 50b das Bremsenpaar 1 der Magnetschienenbremseinheit angelegt. Das Anlegen des Bremsenpaares 1 wird durch die Fahrzeugsteuerung 20 und die Bremssteuerung 21 gesteuert. Während der gesamten Überprüfungsphase 31 läuft die permanente Stillstandsüberwachung 54 ab. Wenn das Bremsenpaar 1 angelegt ist, wird mit Hilfe der Fahrzeugsteuerung 20 und/ oder der Bremssteuerung 21 ein Mindeststrom 60 gemessen.

Wenn kein Stillstand des Schienenfahrzeugs vorliegt, oder wenn kein Mindeststrom erkannt wird, wird ein einem Verfahrensschritt 90 eine Schnellbremse ausgelöst (vgl. Fig. 1b), anschließend in einem Verfahrensschritt 91 die Federspeicherbremse angelegt und in einem Verfahrensschritt 92 durch die Fahrzeugsteuerung 20 eine Fehlermeldung ausgegeben. Zum Schluss erfolgt ein Abbruch 93 der Bremsprobe, ebenfalls durch die Fahrzeugsteuerung 20.

Wird ein Mindeststrom 60 erkannt (vgl. Fig. 1a), kann in einem Verfahrensschritt 62 eine Haltebremse gelöst werden. Anschließend erfolgt eine permanente Stillstandsüberwachung 52 durch die Antriebssteuerung 22. Die Stillstandsüberwachung 52 läuft permanent, solange die Federspeicherbremse und die Haltebremse gelöst sind. Wenn ein Stillstand vorliegt, wird in einem Verfahrensschritt 70 mit Hilfe der Antriebssteuerung 22 gemessen, ob ein voreingestelltes, fahrzeugabhängiges Grenzmoment erreicht wird, das kleiner ist als das Losbrechmoment. Wenn das Grenzmoment nicht erreicht wird, wird das Fahrmoment in einem Verfahrensschritt 72 so lange erhöht, bis das Grenzmoment erreicht wird. Wenn das Grenzmoment erreicht oder überschritten wird, wird in einem nächsten Verfahrensschritt 74a, 74b das Fahrmoment mittels der Fahrzeugsteuerung 20 und der Antriebssteuerung 22 gesperrt.

Nach der Überprüfungsphase 31 für das Bremsenpaar 1 erfolgt jeweils eine weitere Überprüfungsphase 32 für jedes Bremsenpaar 2 bis n-1. Die Überprüfungsphasen 32 laufen analog zur Überprüfungsphase 31 ab, wobei die Federspeicherbremse und die Haltebremse gelöst bleiben und in dem Verfahrensschritt 62 anstelle der Haltebremse ein jeweils vorher geprüftes Bremsenpaar n-1 gelöst wird.

Fig. 1b zeigt einen zweiten Abschnitt des Flussdiagramms, der eine Überprüfungsphase 33 für ein Bremsenpaar n umfasst. In der Überprüfungsphase 33 wird zunächst in einem Verfahrensschritt 51a, 51b das Bremsenpaar n der Magnetschienenbremseinheit angelegt. Das Anlegen des Bremsenpaares n wird durch die Fahrzeugsteuerung 20 und die Bremssteuerung 21 gesteuert. Während der gesamten Überprüfungsphase 33 läuft eine permanente Stillstandsüberwachung 55 ab. Wenn das Bremsenpaar n angelegt ist, wird mit Hilfe der Fahrzeugsteuerung 20 und/oder der Bremssteuerung 21 ein Mindeststrom 61 gemessen.

Wenn kein Stillstand des Schienenfahrzeugs vorliegt, oder wenn kein Mindeststrom erkannt wird, wird ein einem Verfahrensschritt 90 eine Schnellbremse ausgelöst, anschließend in einem Verfahrensschritt 91 die Federspeicherbremse angelegt und in einem Verfahrensschritt 92 durch die Fahrzeugsteuerung 20 eine Fehlermeldung ausgegeben. Zum Schluss erfolgt ein Abbruch 93 der Bremsprobe, ebenfalls durch die Fahrzeugsteuerung 20.

Wird ein Mindeststrom 61 erkannt, kann in einem Verfahrensschritt 63 ein vorher überprüftes Bremsenpaar n-1 gelöst werden. Anschließend erfolgt eine permanente Stillstandsüberwachung 53 durch die Antriebssteuerung 22. Die Stillstandsüberwachung 53 läuft permanent, solange die Federspeicherbremse, die Haltebremse und das vorher überprüfte Bremsenpaar n-1 gelöst sind. Wenn ein Stillstand vorliegt, wird in einem Verfahrensschritt 71 mit Hilfe der Antriebssteuerung 22 gemessen, ob ein voreingestelltes, fahrzeugabhängiges Grenzmoment erreicht wird, das kleiner ist als das Losbrechmoment. Wenn das Grenzmoment nicht erreicht wird, wird das Fahrmoment in einem Verfahrensschritt 73 so lange erhöht, bis das Grenzmoment erreicht wird. Wenn das Grenzmoment erreicht oder überschritten wird, wird in einem nächsten Verfahrensschritt 75a, 75b das Fahrmoment mittels der Fahrzeugsteuerung 20 und der Antriebssteuerung 22 gesperrt.

In Fig. 1c ist ein dritter Abschnitt des Flussdiagramms dargestellt, der die Abschlussphase 34 umfasst. Nachdem das Fahrmoment in der Überprüfungsphase 33 gesperrt wurde, werden in der Abschlussphase 34 in einem Verfahrensschritt 80 Antriebe des Schienenfahrzeugs mittels der Antriebssteuerung 22 ausgeschaltet. Anschließend wird in einem Verfahrensschritt 81 die Testfreigabe durch die Fahrzeugsteuerung 20 zurückgenommen. Danach wird mittels der Bremssteuerung 21 in einem Verfahrensschritt 82 die Federspeicherbremse angelegt. Die Haltebremse wird in einem Verfahrensschritt 83 wieder angelegt und das zuletzt geprüfte Bremsenpaar n in einem Verfahrensschritt 84 gelöst. Das Testergebnis wird in einem Verfahrensschritt 85 angezeigt, und die Stillstandsüberwachung wird in einem Verfahrensschritt 86 mittels der unabhängigen Überwachung 23 gesperrt. Zum Schluss wird das Testende in einem Verfahrensschritt 87 mittels der Fahrzeugsteuerung 20 angezeigt.

Zusammenfassend erfolgt ein Erkennen eines Aufsetzens eines Bremsenpaares 1 bis n auf eine Schienenoberkante, indem das Bremsenpaar 1 bis n eines jeden Drehgestells des Schienenfahrzeugs separat abgesenkt und bestromt wird. Danach werden alle übrigen Fahrzeugbremsen, d.h. die Federspeicherbremse und die Haltebremse gelöst und ein sich langsam steigerndes Fahrmoment vorgegeben, welches so bemessen ist, dass es kleiner ist als das Losbrechmoment für das über das jeweilige Bremsenpaar 1 bis n angebremste Fahrzeug. Dabei wird sehr scharf die Geschwindigkeit des Schienenfahrzeugs überwacht. Sobald die Geschwindigkeit von Null verschieden ist, reicht die Bremswirkung des jeweiligen Bremsenpaares 1 bis n nicht mehr aus, und die Bremsprobe fällt negativ aus. In diesem Fall fallen alle gelösten Fahrzeugbremsen (Federspeicherbremse und Haltebremse) wieder ein. Die Bremsprobe wird vor einer Überprüfung weiterer Bremsenpaare abgebrochen und mit Fehlern abgeschlossen. Bleibt die Geschwindigkeit jedoch bei null, so hat das jeweilige Bremsenpaar 1 bis n eine Sollbremswirkung. Das Ergebnis geht in ein Bremsprobenergebnis ein. Die Bremsprobe umfasst je eine Überprüfungsphase für jedes Drehgestell mit einem Bremsenpaar 1 bis n der Magnetschienenbremseinheit, um eine ausreichende Diagnoseschärfe zu erreichen.

In einer Abwandlung des Verfahrens 10 kann ein von dem Bremsenpaar 1 bis n erzeugtes maximales Bremsmoment gemessen werden, indem das Fahrmoment solange erhöht wird, bis ein Losbrechmoment des Bremsenpaares 1 bis n erreicht ist, wobei dann das erreichte Fahrmoment dem Losbrechmoment und dem maximalen Bremsmoment entspricht.

Jeder Verfahrensschritt des Verfahrens 10 wird von einem Fehlerüberwachungssystem überwacht, das bei jedem Verfahrensschritt einen Fehler detektieren und einen Abbruch der Bremsprobe auslösen kann.

### Bezugszeichenliste

- 10: Verfahren zur Durchführung einer Bremsprobe
- 20: Fahrzeugsteuerung
- 21: Bremssteuerung
- 22: Antriebssteuerung
- 23: Unabhängige Überwachung

- 30: Startphase
- 31: Überprüfungsphase
- 32: Überprüfungsphase
- 33: Überprüfungsphase
- 34: Abschlussphase

- 40: Testfreigabe
- 41: Lösen einer Federspeicherbremse
- 42: Aktivieren einer Stillstandsüberwachung
- 43: Aktivieren einer permanenten Stillstandsüberwachung
- 44: Stillstandsüberwachung

- 50a: Anlegen eines Bremsenpaares
- 50b: Anlegen eines Bremsenpaares
- 51a: Anlegen eines Bremsenpaares
- 51b: Anlegen eines Bremsenpaares
- 52: Permanente Stillstandsüberwachung
- 53: Permanente Stillstandsüberwachung
- 54: Permanente Stillstandsüberwachung
- 55: Permanente Stillstandsüberwachung

- 60: Messen eines Mindeststroms
- 61: Messen eines Mindeststroms
- 62: Lösen einer Haltebremse
- 63: Lösen eines vorher überprüften Bremsenpaares
- 70: Erreichen eines Grenzmoments
- 71: Erreichen eines Grenzmoments
- 72: Erhöhen eines Fahrmoments
- 73: Erhöhen eines Fahrmoments
- 74a: Sperren des Fahrmoments
- 74b: Sperren des Fahrmoments
- 75a: Sperren des Fahrmoments
- 75b: Sperren des Fahrmoments

- 80: Ausschalten der Antriebe
- 81: Entfernen der Testfreigabe
- 82: Anlegen der Federspeicherbremse
- 83: Anlegen der Haltebremse
- 84: Lösen des zuletzt geprüften Bremsenpaares
- 85: Anzeigen eines Testergebnisses
- 86: Sperren der Stillstandsüberwachung
- 87: Anzeigen des Testendes

- 90: Auslösen einer Schnellbremse
- 91: Anlegen der Federspeicherbremse
- 92: Ausgeben einer Fehlermeldung
- 93: Abbrechen der Bremsprobe

## Patentansprüche

1. Verfahren (10) zur Durchführung einer Bremsprobe an mindestens einer Magnetschienenbremseinheit eines Schienenfahrzeuges, wobei eine Bremswirkung eines jeden Bremsenpaares 1 bis n der Magnetschienenbremseinheit bei einem Stillstand des Schienenfahrzeugs überprüft wird, mit
- einer Startphase (30),
- je einer Überprüfungsphase (31, 32, 33) für jedes Bremsenpaar 1 bis n der Magnetschienenbremseinheit und
- einer Abschlussphase (34),
**dadurch gekennzeichnet, dass**
die Bremsprobe von einer Fahrzeugsteuerung (20), einer Bremssteuerung (21), einer Antriebssteuerung (22) und einer unabhängigen Überwachung (23) durchgeführt wird, die mit einander über ein Datenübertragungssystem gekoppelt sind.

2. Verfahren (10) nach einem der Anspruch 1, **dadurch gekennzeichnet, dass** in der Startphase (30)
- eine Testfreigabe erfolgt (40),
- anschließend mindestens eine Federspeicherbremse gelöst wird (41),
- danach ein Stillstandsüberwachungssystem aktiviert wird (42, 43) und
- darauf folgend eine Stillstandsüberwachung (44) durchgeführt wird,
und dass nach der Startphase (30) bei einem vorhandenen Stillstand das Bremsenpaar 1 und nach jeder Überprüfungsphase (31, 32) das jeweils nächste Bremsenpaar 2 bis n angelegt wird.

3. Verfahren (10) nach Anspruch 2, **dadurch gekennzeichnet, dass** die Testfreigabe (40) durch die Fahrzeugsteuerung (20), ein Lösen der Federspeicherbremse (41) durch die Bremssteuerung (21), die Aktivierung des Stillstandsüberwachungssystems (42, 43) durch die Antriebssteuerung (22) sowie die unabhängige Überwachung (23) erfolgt, wobei die Stillstandsüberwachung (44) durch die Antriebssteuerung (22) erfolgt, und ein Anlegen jedes Bremsenpaares 1 bis n (50a, 50b, 51a, 51b) durch die Fahrzeugsteuerung (20) und die Bremssteuerung (21) erfolgt.

4. Verfahren (10) nach Anspruch 2 oder 3, **dadurch gekennzeichnet, dass** bei jeder Überprüfungsphase (31, 32, 33) für jedes Bremsenpaar 1 bis n eine permanente Stillstandsüberwachung (52, 53, 54, 55) durchgeführt wird.

5. Verfahren (10) nach Anspruch 4, **dadurch gekennzeichnet, dass** in jeder Überprüfungsphase (31, 32, 33) ein Mindeststrom gemessen wird (60, 61).

6. Verfahren (10) nach Anspruch 5, **dadurch gekennzeichnet, dass** ein Messen des Mindeststroms (60, 61) durch die Fahrzeugsteuerung (20) und/oder durch die Bremssteuerung (21) erfolgt.

7. Verfahren (10) nach einem der Ansprüche 2 bis 6, **dadurch gekennzeichnet, dass**
- nach dem Anlegen eines Bremsenpaares 1 bis n (50a, 50b, 51a, 51b)
- ein Mindeststrom erkannt wird oder eine Mindeststrommessung entfällt,
- bei einem Bremsenpaar 1 eine Haltebremse (62) oder bei einem Bremsenpaar 2 bis n ein vorher überprüftes Bremsenpaar n-1 (63) gelöst wird und
- anschließend eine permanente Stillstandsüberwachung (52, 53) durchgeführt wird.

8. Verfahren (10) nach Anspruch 7, **dadurch gekennzeichnet, dass** bei einem tatsächlichen Stillstand ein Fahrmoment solange erhöht wird (72, 73), bis ein voreingestelltes, fahrzeugabhängiges Grenzmoment erreicht wird (70, 71), das kleiner ist als das Losbrechmoment, und dass bei einem Erreichen (70, 71) oder Überschreiten des Grenzmoments das Fahrmoment gesperrt wird (74a, 74b, 75a, 75b).

9. Verfahren (10) nach Anspruch 7 und 8, **dadurch gekennzeichnet, dass**
- ein Lösen der Haltebremse (62) oder des Bremsenpaares n-1 (63) durch die Bremssteuerung (21),
- eine Messung des Grenzmoments und ein Hochfahren des Fahrmoments (72, 73) durch die Antriebssteuerung (22) und
- ein Sperren des Fahrmoments (74a, 74b, 75a, 75b) durch die Fahrzeugsteuerung (20) und die Antriebssteuerung (22) erfolgen.

10. Verfahren (10) nach Anspruch 8 oder 9, **dadurch gekennzeichnet, dass** in der Abschlussphase (34) nach dem Sperren des Fahrmoments (74a, 74b, 75a, 75b)
- Antriebe des Schienenfahrzeugs ausgeschaltet werden (80),
- die Testfreigabe entfernt wird (81),
- die Federspeicherbremse wieder angelegt wird (82),
- die Haltebremse wieder angelegt wird (83),
- das zuletzt geprüfte Bremsenpaar n gelöst wird (84),
- das Testergebnis angezeigt wird (85),
- die Stillstandsüberwachung gesperrt wird (86) und
- das Testende angezeigt wird (87).

11. Verfahren (10) nach Anspruch 10, **dadurch gekennzeichnet, dass**
- ein Ausschalten der Antriebe (80) durch die Antriebssteuerung (22),
- ein Wegnehmen der Testfreigabe (81) durch die Fahrzeugsteuerung (20),
- ein Anlegen der Federspeicherbremse (82), der Haltebremse (83) und des zuletzt geprüften Bremsenpaares n-1 (84) durch die Bremssteuerung (21),
- ein Anzeigen des Testergebnisses (85) und ein Anzeigen des Testendes (87) durch die Fahrzeugsteuerung (20) und
- eine Sperrung der Stillstandsüberwachung (86) durch die unabhängige Überwachung (23) erfolgen.

12. Verfahren (10) nach einem der Ansprüche 5 bis 7, **dadurch gekennzeichnet, dass** bei einem Unterschreiten des Mindeststroms oder bei einem mangelnden Stillstand
- eine Schnellbremse ausgelöst wird (90),
- anschließend die Federspeicherbremse angelegt wird (91),
- danach eine Fehlermeldung ausgegeben wird (92) und
- zum Schluss die Bremsprobe abgebrochen wird (93).

13. Verfahren (10) nach Anspruch 12, **dadurch gekennzeichnet, dass**
- ein Auslösen der Schnellbremse (90) und ein Anlegen der Federspeicherbremse (91) durch die Bremssteuerung (21) erfolgen und
- eine Ausgabe der Fehlermeldung (92) und ein Abbrechen der Bremsprobe (93) durch die Fahrzeugsteuerung (20) erfolgen.

14. Verfahren (10) nach Anspruch 9, **dadurch gekennzeichnet, dass** ein von dem Bremsenpaar 1 bis n erzeugtes maximales Bremsmoment gemessen wird, indem das Fahrmoment solange erhöht wird (72, 73), bis ein Losbrechmoment des jeweiligen Bremsenpaares 1 bis n erreicht ist, wobei dann das erreichte Fahrmoment dem Losbrechmoment und dem maximalen Bremsmoment entspricht.

15. Verfahren (10) nach einem der vorhergehenden Ansprüche, **dadurch gekennzeichnet, dass** jeder Verfahrensschritt von einem Fehlerüberwachungssystem überwacht wird, das bei jedem Verfahrensschritt einen Fehler detektieren und einen Abbruch der Bremsprobe auslösen kann.

## Claims

1. A method (10) for conducting a brake test on at least one magnetic rail brake unit of a rail vehicle, wherein a braking effect of each of brake pairs 1 to n of the magnetic rail brake unit is checked at a standstill of the rail vehicle, comprising
- a starting phase (30),
- a checking phase (31, 32, 33) for each of the brake pairs 1 to n of the magnetic rail brake unit, and
- a completion phase (34),
**characterized in that**
the brake test is conducted by a vehicle control system (20), a brake control system (21), a drive control system (22) and an independent monitoring system (23), all of which are coupled to one another via a data transmission system.

2. The method (10) according to claim 1, **characterized in that** in the starting phase (30)
- a test release is performed (40),
- subsequently at least one spring-loaded brake is released (41),
- thereafter a standstill monitoring system is activated (42, 43) and
- subsequently a standstill monitoring (44) is carried out,
and that, after the starting phase (30), in the event of a present standstill, brake pair 1 is engaged and, after each checking phase (31, 32), the respective next brake pair 2 to n is engaged.

3. The method (10) according to claim 2, **characterized in that** the test release (40) is performed by the vehicle control system (20), a release of the spring-loaded brake (41) by the brake control system (21), the activation of the standstill monitoring system (42, 43) by the drive control system (22) and by the independent monitoring system (23), wherein the standstill monitoring (44) is carried out by the drive control system (22), and an engagement of each brake pair 1 to n (50a, 50b, 51a, 51b) is effected by the vehicle control system (20) and the brake control system (21).

4. The method (10) according to claim 2 or 3, **characterized in that** a standstill monitoring (52, 53, 54, 55) is carried out permanently for each brake pairs 1 to n during each checking phase (31, 32, 33).

5. The method (10) according to claim 4, **characterized in that** a minimum current (60, 61) is measured in each checking phase (31, 32, 33).

6. The method (10) according to claim 5, **characterized in that** the minimum current (60, 61) is measured by the vehicle control system (20) and/or by the brake control system (21).

7. The method (10) according to any of claims 2 to 6, **characterized in that**
- after application of a brake pair 1 to n (50a, 50b, 51a, 51b)
- a minimum current is identified or a minimum current measurement is omitted,
- in the case of a brake pair 1 a holding brake (62) is released or in the case of a brake pair 2 to n a previously checked brake pair n-1 (63) is released, and
- a permanent standstill monitoring (52, 53) is carried out subsequently.

8. The method (10) according to claim 7, **characterized in that**, in the event of an actual standstill, a driving torque is increased (72, 73) until a preset, vehicle-dependent threshold torque is reached (70, 71), which threshold torque is smaller than the breakaway torque, and **in that**, when the threshold torque is reached (70, 71) or exceeded, the driving torque is inhibited (74a, 74b, 75a, 75b).

9. The method (10) according to claim 7 or 8, **characterized in that**
- the holding brake (62) or the brake pair n-1 (63) is released by the brake controller (21),
- the threshold torque is measured and the driving torque (72, 73) is increased by the drive control system (22), and
- the driving torque (74a, 74b, 75a, 75b) is inhibited by the vehicle control system (20) and the drive control system (22).

10. The method (10) according to claim 8 or 9, **characterized in that** in the completion phase (34) after inhibiting the driving torque (74a, 74b, 75a, 75b)
- drives of the rail vehicle are switched off (80),
- the test release is removed (81),
- the spring-loaded brake is re-applied (82),
- the holding brake is re-applied (83),
- the last tested brake pair n is released (84),
- the test result is displayed (85),
- the standstill monitoring is disabled (86) and
- the end of the test is displayed (87).

11. The method (10) according to claim 10, **characterized in that**
- the drives (80) are switched off by the drive control system (22),
- the test release (81) is removed by the vehicle control system (20),
- the spring loaded brake (82), the holding brake (83) and the last tested brake pair n-1 (84) are engaged by the brake control system (21),
- the vehicle control system (20) displays the test result (85) and the end of the test (87), and
- a disabling of the standstill monitoring (86) is carried out by the independent monitoring system (23).

12. The method (10) according to any of claims 5 to 7, **characterized in that**, in the event of the minimum current being not reached or in the event of a lack of standstill
- a quick brake is triggered (90),
- subsequently the spring-loaded brake is engaged (91),
- subsequently, an error message is output (92) and
- finally, the brake test is canceled (93).

13. The method (10) according to claim 12, **characterized in that**
- the quick brake (90) is triggered and the spring loaded brake (91) is engaged by the brake control system (21), and
- an output of the error message (92) and a cancellation of the brake test (93) are effected by the vehicle control system (20).

14. The method (10) according to claim 9, **characterized in that** a maximum braking torque generated by the brake pair 1 to n is measured by increasing (72, 73) the driving torque until a breakaway torque of the respective brake pair 1 to n is reached, wherein the driving torque reached then corresponds to the breakaway torque and the maximum braking torque.

15. The method (10) according to any of the preceding claims, **characterized in that** each method step is monitored by a fault monitoring system being able to detect an error at each method step and to trigger cancellation of the brake test.

## Revendications

1. Procédé (10) pour effectuer un essai de frein sur au moins une unité de frein électromagnétique sur rail d'un véhicule ferroviaire, dans lequel un effet de freinage de chacune des paires de freins 1 à n de l'unité de frein électromagnétique sur rail est vérifié lors d'un arrêt du véhicule ferroviaire, comportant
- une phase initiale (30),
- une phase de vérification (31, 32, 33) respective pour chaque paire de freins 1 à n de l'unité de frein électromagnétique sur rail et
- une phase finale (34),
**caractérisé en ce que**
l'essai de frein est effectué par un dispositif de commande de véhicule (20), un dispositif de commande de frein (21), un dispositif de commande d'entraînement (22) et un dispositif de surveillance indépendant (23), lesquels sont couplés entre eux par l'intermédiaire d'un système de transmission de données.

2. Procédé (10) selon l'une des revendications 1, **caractérisé en ce que,** dans la phase initiale (30)
- une validation de test est réalisée (40),
- au moins un frein à accumulateur à ressort est ensuite desserré (41),
- puis un système de surveillance d'arrêt est activé (42, 43) et
- après cela, une surveillance d'arrêt (44) est effectuée,
**et en ce que,** après la phase initiale (30), lors d'un arrêt existant, la paire de freins 1 est appliquée et, après chaque phase de vérification (31, 32), la paire de freins respectivement suivante 2 à n est appliquée.

3. Procédé (10) selon la revendication 2, **caractérisé en ce que** la validation de test (40) est réalisé par le dispositif de commande de véhicule (20), un desserrage du frein à accumulateur à ressort (41) est réalisé par le dispositif de commande de frein (21), l'activation du système de surveillance d'arrêt (42, 43) est réalisé par le dispositif de commande d'entraînement (22) ainsi que le dispositif de surveillance indépendant (23), dans lequel la surveillance d'arrêt (44) est réalisée par le dispositif de commande d'entraînement (22), et une application de chaque paire de freins 1 à n (50a, 50b, 51a, 51b) est réalisée par le dispositif de commande de véhicule (20) et le dispositif de commande de frein (21).

4. Procédé (10) selon la revendication 2 ou 3, **caractérisé en ce qu'**à chaque phase de vérification (31, 32, 33) pour chaque paire de freins 1 à n, une surveillance d'arrêt permanente (52, 53, 54, 55) est effectuée.

5. Procédé (10) selon la revendication 4, **caractérisé en ce que** lors de chaque phase de vérification (31, 32, 33), un courant minimal est mesuré (60, 61).

6. Procédé (10) selon la revendication 5, **caractérisé en ce qu'**une mesure du courant minimal (60, 61) est réalisée par le dispositif de commande de véhicule (20) et/ou par le dispositif de commande de frein (21).

7. Procédé (10) selon l'une des revendications 2 à 6, **caractérisé en ce que**
- après l'application d'une paire de freins 1 à n (50a, 50b, 51a, 51b)
- un courant minimal est détecté ou une mesure de courant minimal est supprimée,
- pour une paire de freins 1, un frein de maintien (62) est desserré, ou pour une paire de freins 2 à n, une paire de freins n-1 (63) vérifiée auparavant est desserrée et
- une surveillance d'arrêt permanente (52, 53) est ensuite effectuée.

8. Procédé (10) selon la revendication 7, **caractérisé en ce que,** lors d'un arrêt réel, un couple de conduite est augmenté (72, 73) jusqu'à ce qu'un couple limite préréglé dépendant du véhicule soit atteint (70, 71), lequel couple limite est inférieur au couple de démarrage, **et en ce que,** lors d'une atteinte (70, 71) ou d'un dépassement du couple limite, le couple de conduite est bloqué (74a, 74b, 75a, 75b).

9. Procédé (10) selon les revendications 7 et 8, **caractérisé en ce que**
- un desserrage du frein de maintien (62) ou de la paire de freins n-1 (63) est réalisé par le dispositif de commande de frein (21),
- une mesure du couple limite et une augmentation du couple de conduite (72, 73) sont réalisées par le dispositif de commande d'entraînement (22) et
- un blocage du couple de conduite (74a, 74b, 75a, 75b) est réalisé par le dispositif de commande de véhicule (20) et le dispositif de commande d'entraînement (22).

10. Procédé (10) selon la revendication 8 ou 9, **caractérisé en ce que,** dans la phase finale (34) après le blocage du couple de conduite (74a, 74b, 75a, 75b)
- des entraînements du véhicule ferroviaire sont désactivés (80),
- la validation de test est retirée (81),
- le frein à accumulateur à ressort est appliqué à nouveau (82),
- le frein de maintien est appliqué à nouveau (83),
- la dernière paire de freins n vérifiée est desserrée (84),
- le résultat du test est affiché (85),
- la surveillance d'arrêt est bloquée (86) et
- la fin du test est affichée (87).

11. Procédé (10) selon la revendication 10, **caractérisé en ce que**
- une désactivation des entraînements (80) est réalisée par le dispositif de commande d'entraînement (22),
- un retrait de la validation de test (81) est réalisé par le dispositif de commande de véhicule (20),
- une application du frein à accumulateur à ressort (82), du frein de maintien (83) et de la dernière paire de freins n-1 (84) vérifiée est réalisée par le dispositif de commande de frein (21),
- un affichage du résultat du test (85) et un affichage de la fin du test (87) sont réalisés par le dispositif de commande de véhicule (20) et
- un blocage de la surveillance d'arrêt (86) est réalisé par le dispositif de surveillance indépendant (23).

12. Procédé (10) selon l'une des revendications 5 à 7, **caractérisé en ce que,** lorsque le courant est inférieur au courant minimal ou lors d'un défaut d'arrêt
- un frein à action rapide est déclenché (90),
- le frein à accumulateur à ressort est ensuite appliqué (91),
- après cela, un message d'erreur est émis (92) et
- pour finir, l'essai de frein est interrompu (93).

13. Procédé (10) selon la revendication 12, **caractérisé en ce que**
- un déclenchement du frein à action rapide (90) et une application du frein à accumulateur à ressort (91) sont réalisés par le dispositif de commande de frein (21) et
- une émission du message d'erreur (92) et une interruption de l'essai de frein (93) sont réalisées par le dispositif de commande de véhicule (20).

14. Procédé (10) selon la revendication 9, **caractérisé en ce qu'**un couple de freinage maximal généré par la paire de freins 1 à n est mesuré en augmentant le couple de conduite (72, 73) jusqu'à ce qu'un couple de démarrage de la paire de freins 1 à n respective soit atteint, dans lequel le couple de conduite atteint correspond alors au couple de démarrage et au couple de freinage maximal.

15. Procédé (10) selon l'une des revendications précédentes, **caractérisé en ce que** chaque étape de procédé est surveillée par un système de surveillance d'erreur, lequel peut, à chaque étape de procédé, détecter une erreur et déclencher une interruption de l'essai de frein.
